# DEMANDE DE BREVET EUROPEEN

(11) **EP 4 752 003 A1**
(43) Date de publication de la demande: **03.06.2026**
(21) Numéro de dépôt: 25219813.0
(22) Date de dépôt: 01.12.2025
(51) Int. Cl.: B60R 5/02

(54) **ENSEMBLE DE COFFRE À BAGAGES AVANT DE VÉHICULE AUTOMOBILE**

(30) Priorité: 29.11.2024 FR 2413181
(71) Demandeur: Renault s.a.s, 92100 Boulogne Billancourt (FR)
(72) Inventeur: BUFFETAUD, Julien, 78280 GUYANCOURT (FR); PAROLINI, Pascal, 78280 GUYANCOURT (FR)

(57) **Abrégé**

L'invention concerne un Ensemble de coffre à bagages comportant un caisson (32) adapté à être installé dans un coffre avant de véhicule automobile, ledit caisson comprenant d'une part, quatre parois dressées deux à deux en regard et délimitant une bordure libre supérieure (42) formant une ouverture (44), et d'autre part un fond (46) opposé à ladite ouverture et relié auxdites quatre parois. Lesdites parois comprennent quatre premières portions de paroi solidaires dudit fond (46) et définissant un premier cylindre généré par une première génératrice, et quatre deuxièmes portions de parois solidaires de ladite bordure (42), définissant un deuxième cylindre généré par une deuxième génératrice ; et ledit premier cylindre et ledit deuxième cylindre sont montés réglables à coulissement l'un dans l'autre suivant lesdites génératrices pour pouvoir régler la profondeur dudit caisson (32).

## Description

La présente invention se rapporte à un ensemble de coffre à bagages incluant un caisson adapté à être installé à l'avant d'un véhicule automobile.

Les nouvelles architectures de véhicule automobile électrique permettent de libérer de l'espace à l'avant des véhicules pour pouvoir y insérer un caisson plus ou moins grand permettant d'y accueillir des bagages. Un tel caisson forme alors un coffre avant, également désigné par l'anglicisme « *frunk* ».

En effet, comparé aux véhicules automobiles traditionnels équipés de moteurs thermiques, les véhicules automobile à traction électrique mettent en œuvre des moyens moins volumineux à l'avant du véhicule, laissant par là même de plus grands espaces libres.

Par ailleurs, un moteur électrique produit de moins grande quantité d'énergie thermique qu'un moteur traditionnel, de telle sorte que l'aménagement d'un coffre à bagages à l'avant du véhicule dans le compartiment moteur, ne pose aucune difficulté, pour l'intégrité des bagages et leur sensibilité thermique.

On pourra se référer au document GB2629155, lequel divulgue un véhicule automobile à propulsion électrique équipé d'un caisson installé dans le coffre avant du véhicule.

Toutefois, les architectures de véhicule automobile électrique présentent différentes configurations de traction, et notamment des véhicules où le moteur est à l'avant pour transmettre la puissance sur les roues avant, des véhicules ou le moteur est à l'arrière pour transmettre la puissance sur les roues arrière ou encore des véhicules quatre roues motrices. De la sorte, pour des architectures voisines, l'espace disponible dans le coffre avant pour accueillir un caisson présente des géométries variables. L'espace disponible est ainsi plus important lorsque le moteur est à l'arrière et il l'est moins lorsqu'il est à l'avant ou dans les versions à quatre roues motrices.

Partant, différents caissons de coffre doivent être prévus pour les différentes architectures proposées, ce qui a pour conséquence d'augmenter les coûts de fabrication.

Aussi, un problème qui se pose et que vise à résoudre la présente invention est de fournir des ensembles de coffre à bagages à plus faibles coûts.

Dans le but de résoudre ce problème, et selon un premier objet, **il** est proposé un ensemble de coffre à bagages comportant un caisson adapté à être installé dans un coffre avant de véhicule automobile, ledit caisson comprenant d'une part, quatre parois dressées deux à deux en regard et délimitant une bordure libre supérieure formant une ouverture, et d'autre part un fond opposé à ladite ouverture et relié auxdites quatre parois.

Lesdites parois comprennent quatre premières portions de paroi solidaires dudit fond et définissant un premier cylindre généré par une première génératrice, et quatre deuxièmes portions de parois solidaires de ladite bordure, définissant un deuxième cylindre généré par une deuxième génératrice ; et ledit premier cylindre et ledit deuxième cylindre sont montés réglables à coulissement l'un dans l'autre suivant lesdites génératrices pour pouvoir régler la profondeur dudit caisson.

Ainsi, une caractéristique de l'invention réside dans la mise en œuvre de parois du caisson permettant de faire varier sa profondeur et par conséquent, sa hauteur. De la sorte, le même caisson peut être adapté aux diverses architectures de véhicule en faisant varier la position relative des premier et deuxième cylindres. Cela permet de réaliser un même type de caisson pour toutes les architectures à des coûts plus avantageux.

Préférentiellement, les quatre premières portions de paroi solidaires dudit fond sont moulées d'une seule pièce dans un matériau polymère et les quatre deuxièmes portions de parois sont également moulées d'une seule pièce dans ce même matériau polymère.

Selon un mode de mise en œuvre de l'invention particulièrement avantageux, ledit premier cylindre défini par lesdites quatre premières portions de paroi est monté à coulissement à l'intérieur dudit deuxième cylindre défini par lesdites quatre deuxièmes portions de parois. Autrement dit, la section droite de la surface extérieure du premier cylindre est sensiblement identique, au jeu fonctionnel près, à la section droite de la surface intérieure du deuxième cylindre afin de pouvoir coulisser dans un autre.

De la sorte, comme on l'expliquera dans la description détaillée, aucun fluide ne peut pénétrer par gravité à l'intérieur du caisson en cas d'écoulement extérieur contre les parois.

Aussi, selon l'invention, lesdites quatre premières portions de paroi définissent un premier bord libre opposé audit fond et respectivement quatre faces extérieures, et préférentiellement, au moins deux premières portions de paroi en regard présentent chacune une pluralité de languettes flexibles s'étendant librement en saillie desdites faces extérieures à l'opposé dudit premier bord libre. Comme on l'expliquera ci-après, les languettes flexibles sont adaptées à coopérer avec respectivement les deuxièmes portions de paroi pour pouvoir bloquer en translation le premier cylindre par rapport au deuxième cylindre. On observera que la flexibilité des languettes résulte de la nature du matériau polymère mis en œuvre pour mouler le premier cylindre. Par ailleurs, les languettes sont de forme sensiblement rectangulaire et elles résultent d'un enfoncement local de la paroi vers l'extérieur du premier cylindre lors du moulage. En outre, conformément à l'invention, chacune des languettes de ladite pluralité de languettes présente une extrémité libre en retour opposée à la face extérieure correspondante. Comme on l'expliquera plus en détail ci-après, l'extrémité libre en retour des languettes permet une meilleure solidarisation des parois des cylindres entre elles.

Aussi, lesdites quatre deuxièmes portions de paroi définissent un deuxième bord libre opposé à ladite bordure libre, et au moins deux deuxièmes portions de paroi présentent chacune une pluralité de premières fentes ménagées à une première distance dudit deuxième bord libre pour pouvoir coopérer avec les languettes flexibles. Les fentes pratiquées dans les deuxièmes portions de paroi définissent ainsi un plan moyen sensiblement perpendiculaires à la deuxième génératrice. De surcroît, elles sont réparties dans les deuxièmes portions de paroi de manière identique à la répartition des languettes sur les premières portions de paroi. De la sorte, lorsque le premier cylindre défini par les premières portions de paroi est engagé à l'intérieur du deuxième cylindre défini par les deuxièmes portions de paroi, les languettes flexibles en saillie se rétractent vers l'intérieur du premier cylindre pour autoriser l'engagement à coulissement axial du premier cylindre à l'intérieur du deuxième cylindre.

En outre, les languettes viennent respectivement s'étendre au droit des fentes. Et lorsque les extrémités libres des languettes viennent s'étendre en regard des fentes, elles se relâchent pour venir s'y étendre. Et plus précisément, les extrémités libres en retour des languettes viennent respectivement s'engager dans les fentes.

De la sorte, les languettes engagées dans les fentes permettent de verrouiller les premières parois du premier cylindre avec les deuxièmes parois du deuxième cylindre.

Préférentiellement, lesdites deux deuxièmes portions de paroi en regard présentent chacune une pluralité de deuxièmes fentes ménagées à une deuxième distance dudit deuxième bord libre pour pouvoir coopérer avec les languettes flexibles.

Ainsi, la pluralité de premières fentes est par exemple ménagée près du deuxième bord libre défini par les quatre deuxièmes portions de paroi, tandis que la pluralité de deuxièmes fentes est ménagée à une deuxième distance, écartée du deuxième bord libre.

De la sorte, les languettes peuvent venir en prise dans les deuxièmes fentes alors que le premier cylindre défini par les premières portions de paroi, a été entraîné en translation vers la bordure libre du deuxième cylindre défini par la deuxième portion de paroi. Dit autrement, la profondeur du caisson a été réduite et par conséquent, sa hauteur également.

Selon une caractéristique de l'invention particulièrement avantageuse, l'ensemble de coffre comprend en outre, une chemise cylindrique adaptée à être insérée entre lesdites quatre premières portions de paroi définissant un premier cylindre et lesdites quatre deuxièmes portions de parois définissant un deuxième cylindre pour pouvoir régler la position relative desdits deux cylindres. Compte tenu de la nature du matériau des deux cylindres, les parois sont aptes à se déformer sensiblement, les premières portions à se rétracter, les deuxièmes portions à s'écarter les unes des autres, pour autoriser le passage de la chemise cylindrique.

Préférentiellement, ladite chemise cylindrique est adaptée à coopérer avec lesdites languettes pour les rétracter vers l'intérieur dudit premier cylindre défini par lesdites quatre premières portions de paroi.

Autrement dit, lorsque la chemise cylindrique est insérée entre les deux cylindres, elle vient rétracter simultanément les languettes flexibles vers l'intérieur du premier cylindre et partant, les languettes libèrent les fentes correspondantes. Les deux cylindres peuvent alors être entraînés à coulissement l'un dans l'autre afin de réduire le volume du caisson ou bien l'augmenter.

Par ailleurs, lesdites quatre deuxièmes portions présentent un décrochement près de ladite bordure libre supérieure en formant un épaulement d'appui extérieur. Un tel épaulement d'appui permet de faciliter la fixation du caisson à l'intérieur du coffre avant.

Selon un autre objet, la présente invention concerne un véhicule automobile présentant un coffre avant équipé d'un groupe motopropulseur électrique, et comprenant un ensemble de coffre tel que décrit ci-dessus.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

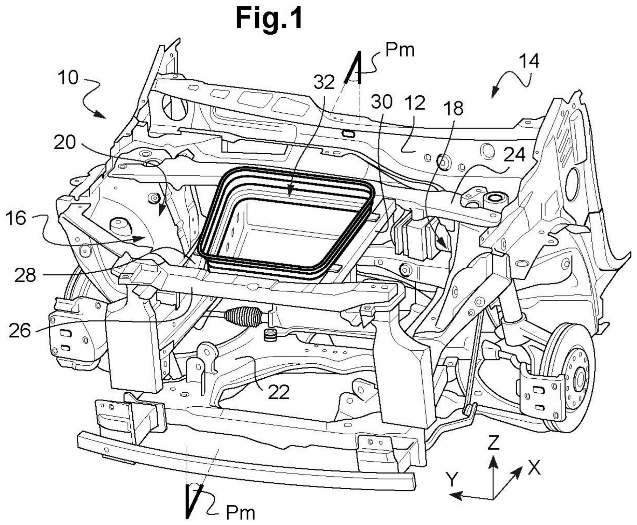

[Fig. 1] est une vue schématique en perspective d'une structure avant de véhicule automobile selon l'invention ;
[Fig. 2A] est une vue schématique en perspective d'un élément de l'invention dans un premier état ;
[Fig. 2B] est une vue schématique en perspective de l'élément de l'invention illustré sur la [Fig. 2A] dans un second état ;
[Fig. 3] est une vue schématique partielle en perspective d'un élément de l'objet représenté sur les [Fig. 2A] et [Fig. 2B] ;
[Fig. 4A] est une première vue schématique partielle en perspective d'un autre élément de l'objet représenté sur les [Fig. 2A] et [Fig. 2B] ;
[Fig. 4B] est une seconde vue schématique partielle en perspective de l'autre élément représenté sur la [Fig. 4A] ;
[Fig. 5A] est une première vue schématique partielle en coupe de l'objet de la [Fig. 2A] selon le plan VA-VA ;
[Fig. 5B] est une deuxième vue schématique partielle en coupe de l'objet de la [Fig. 2B] selon le plan VB-VB ; et,
[Fig. 6] est une vue schématique partielle d'un ensemble conforme à l'invention. La [Fig. 1] montre une structure avant 10 de véhicule automobile électrique. Elle s'inscrit dans un repère orthogonal X, Y, Z, du véhicule automobile, dans lequel l'axe X s'étend selon une direction longitudinale avant-arrière, orienté vers l'arrière ; l'axe Y s'étend selon une direction transversale du véhicule, orienté de la gauche vers la droite lorsque l'on est en situation de roulage ; et l'axe Z s'étend selon une direction verticale, orienté à l'opposé du sol.

La structure avant 10 comprend un tablier 12 délimitant longitudinalement un habitacle 14 d'un compartiment moteur 16, et deux flancs latéraux, 18, 20 délimitant latéralement le compartiment moteur 16.

Un cadre de berceau 22 vient s'étendre sous le compartiment moteur 16 afin de supporter au moins en partie le groupe motopropulseur, lequel n'est pas représenté. Aussi, au droit du cadre de berceau 22, la structure avant 10 comporte une traverse supérieure postérieure 24 longeant le tablier 12 et vers l'avant, une traverse supérieure antérieure 26 sensiblement parallèle. Et les deux traverses, 24, 26 sont reliés l'une à l'autre par deux profilés longitudinaux 28, 30 opposés l'un de l'autre par rapport à un plan médian longitudinal Pm.

Ainsi, les deux traverses 24, 26 et les deux profilés longitudinaux 28, 30 définissent un cadre trapézoïdal à l'intérieur duquel est installé un caisson 32.

Aussi, en fonction de l'architecture véhicule retenue, l'espace occupé par le groupe motopropulseur est plus ou moins important, de sorte que le caisson 32 peut venir s'étendre plus ou moins à l'intérieur du compartiment moteur 16.

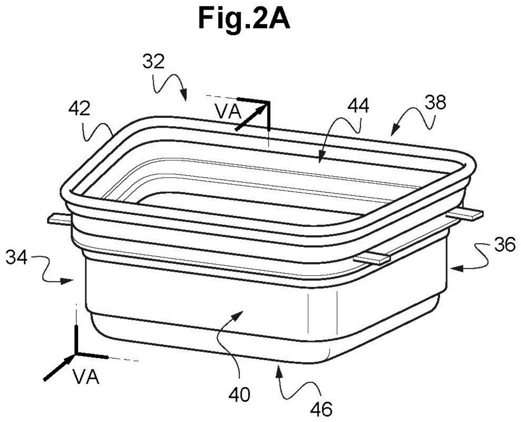

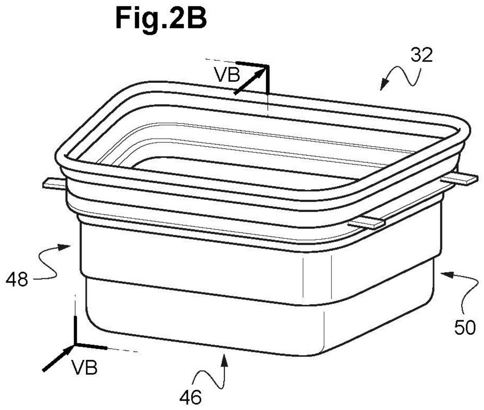

L'objet de la présente invention est de prévoir un seul et même caisson 32 réglable. On retrouve sur la [Fig. 2A] le caisson 32 dans sa forme compacte, tandis qu'il est dans sa forme étendue sur la [Fig. 2B].

Le caisson 32 présente deux parois latérales en regard, une paroi latérale droite 34 et une paroi latérale gauche 36, d'une part, et une paroi postérieure 38 opposée à une paroi antérieure 40 d'autre part. Il présente également une bordure libre supérieure 42 définissant une ouverture 44. Et à l'opposé de l'ouverture 44, le caisson 32 présent un fond 46.

On observera que sur la [Fig. 2B] le fond 46 du caisson 32 est abaissé comparativement au fond 46 du caisson 32 illustré sur la [Fig. 2A]. Pour ce faire, le caisson 32 est réalisé en deux parties, une partie supérieure 48 et une partie inférieure 50.

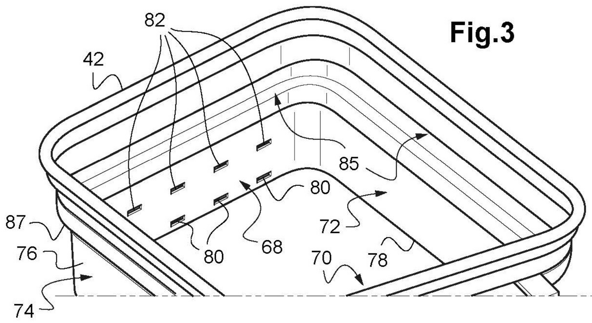

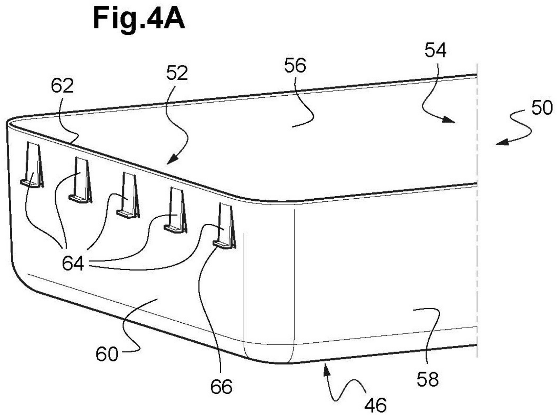

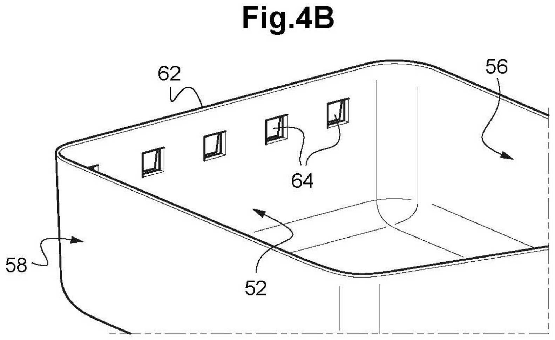

On décrira à présent en référence aux [Fig. 3], [Fig. 4A] et [Fig. 4B] les moyens permettant le réglage de la hauteur du caisson 32, et par conséquent de sa profondeur. On retrouve partiellement sur la [Fig. 4A] la partie inférieure 50 du caisson 32. Elle présente une première portion de paroi latérale droite 52 s'étendant en regard d'une première portion de paroi latérale gauche 54. Elle présente également une première portion de paroi postérieure 56 s'étendant en regard d'une première portion de paroi antérieure 58.

Ces premières portions de paroi 52, 54, 56 et 58 sont dressées sur les bords de la paroi de fond 46 et se rejoignent respectivement en formant un premier cylindre 60.

Aussi, les premières portions de paroi 52, 54, 56 et 58 définissent un premier bord libre 62 et quatre faces extérieures.

La partie inférieure 50 est moulée d'une seule pièce dans un matériau polymère. Ce matériau est par exemple du polyéthylène ou bien encore du polyamide, le cas échéant renforcé de fibres.

Aussi, la partie inférieure 50 est moulée de manière à ménager le long du premier bord libre 62 sur la portion latérale droite 52, cinq languettes flexibles 64 s'étendant librement en saillie de la face extérieure et dans une direction opposée au premier bord libre.

Les languettes flexibles 64 sont régulièrement espacées les unes des autres sur toute la longueur de la portion latérale droite 52.

Par ailleurs, chacune des languettes 64 présente une extrémité libre en retour 66 s'étendant à l'opposé de la face extérieure.

Aussi, comme illustré sur la [Fig. 4B], où l'on retrouve la première portion de paroi latérale droite 52, vue de l'intérieur de la partie inférieure 50, les languettes 64 sont sensiblement rectangulaires et elles correspondent à l'enfoncement d'une portion de paroi rectangulaire retenue par un côté supérieur longeant le bord libre 62.

Compte tenu de la nature du matériau polymère, les languettes 64 sont flexibles et elles peuvent être rétractées vers l'intérieur de la partie inférieure 50 comme on l'expliquera ci-après.

Aussi, la première portion de paroi latérale gauche 54 présente de la même façon, cinq languettes flexibles totalement identiques à celles de la paroi latérale droite 52. S'agissant de la partie supérieure 48 du caisson 32 que l'on retrouve illustrée partiellement sur la [Fig. 3], elle présente une deuxième portion de paroi latérale droite 68 s'étendant en regard d'une deuxième portion de paroi latérale gauche 70. Elle présente également une deuxième portion de paroi postérieure 72 s'étendant en regard d'une deuxième portion de paroi antérieure 74.

Ces deuxièmes portions de paroi 68, 70, 72 et 74 se rejoignent respectivement en formant un deuxième cylindre 76 défini par une deuxième génératrice. Aussi, les deuxièmes portions de paroi 68, 70, 72 et 74 définissent un deuxième bord libre 78 et quatre faces intérieures.

La partie supérieure 48 est également moulée d'une seule pièce dans ledit matériau polymère.

Durant le moulage, il est ménagé dans la partie supérieure 48, le long du deuxième bord libre 78 sur la deuxième portion de paroi latérale droite 68, cinq premières fentes 80. Seules trois premières fentes apparaissent sur la [Fig. 3]. Elles s'étendent en outre de manière régulièrement espacées les unes des autres près du bord libre 78 et sur toute la longueur de la deuxième portion de paroi latérale droite 68. Leur longueur est sensiblement supérieure à la largeur des languettes 64 de la partie inférieure 50.

De plus, il est ménagé également, à distance du deuxième bord libre 78, sur la deuxième portion de paroi latérale droite 68, cinq deuxièmes fentes 82 respectivement au droit et parallèlement aux premières fentes 80. Seules quatre deuxièmes fentes 82 apparaissent sur la [Fig. 3].

Aussi, la deuxième portion de paroi latérale gauche 70, située en regard de la deuxième portion de paroi latérale droite 68, présente de la même façon cinq premières fentes identiques situées près du bord libre 78 et des deuxièmes fentes à distance de ce bord libre 78.

Par ailleurs, les quatre deuxièmes portions de paroi 68, 70, 72 et 74 présentent un décrochement 85 à l'opposé du deuxième bord libre 78 et près de la bordure libre supérieure 42 en formant un épaulement d'appui extérieur 87.

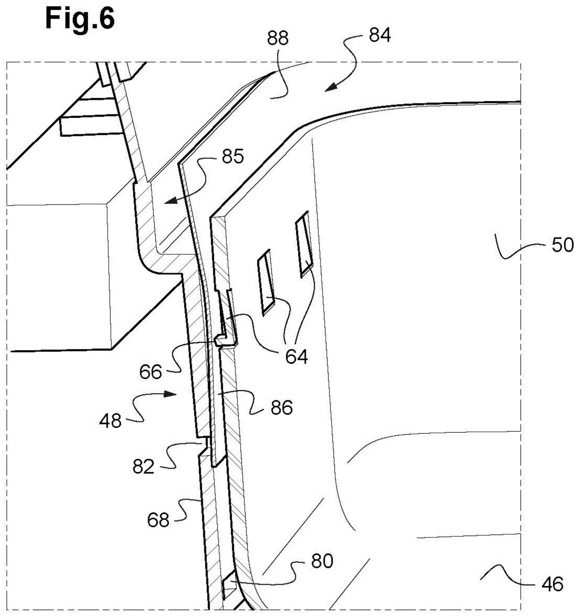

On se reportera à présent sur la [Fig. 6] montrant la façon dont les deux parties 48, 50 du caisson 32 sont assemblées.

On retrouve partiellement sur cette [Fig. 6], en coupe verticale, la partie supérieure 48 du caisson 32, et plus précisément la deuxième portion de paroi latérale droite 68, au droit de première 80 et deuxième 82 fentes.

Aussi, une chemise cylindrique 84 est insérée à l'intérieur de la partie supérieure 48, jusqu'à venir masquer les deuxièmes fentes 82. Elle vient bien évidemment masquer également les deuxièmes fentes de la paroi latérale gauche non représentée ici.

La chemise cylindrique 84 est faite d'une feuille métallique rigide et elle présente une première portion exclusivement cylindrique 86 appliquée contre la surface intérieure de la partie supérieure 48 et une seconde portion sensiblement conique 88 prolongeant la première portion 86 en s'évasant. Ainsi, la seconde portion 88 de chemise cylindrique 84 vient s'étendre à tout le moins partiellement, dans le décrochement 85.

Partant, la partie inférieure 50 du caisson 32 peut être engagée plus aisément à l'intérieur de la chemise cylindrique 84, en présentant le fond 46 à travers la seconde portion 88 de la chemise cylindrique 84.

En poursuivant l'enfoncement de la partie inférieure 50, l'extrémité libre en retour 66 des languettes 64 vient en appui glissant, tout d'abord contre la seconde portion 88, ce qui provoque leur rétraction vers l'intérieur de la partie inférieure 50 du caisson. Ensuite, la rétraction des languettes se poursuit puisque leur extrémité libre en retour 66 vient en appui contre la première portion 86, cylindrique, de la chemise cylindrique 84.

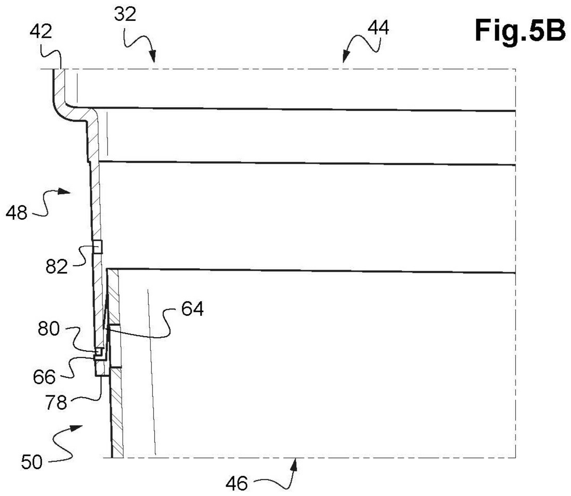

Et puisque les deuxièmes fentes 82 sont masquées par la première portion 86 de la chemise 84, tout en poursuivant l'enfoncement de la partie inférieure 50 à travers la chemise cylindrique 84 et la partie supérieure 48 du caisson, les extrémités libres en retour 66 des languettes flexibles 64 échappent à la portée de la première portion 86 de la chemise cylindrique 84 pour venir en appui glissant contre la face intérieure de la partie supérieure 48 et en fin de course, venir en regard des premières fentes 80. Les languettes flexibles 64 se relâchent alors et les extrémités libres en retour 66 viennent s'engager dans les premières fentes 80, comme illustré sur la [Fig. 5B].

On retrouve sur cette dernière figure, partiellement la partie inférieure 50 engagée dans la partie supérieure 48 du caisson 32. Aussi, l'extrémité libre en retour 66 de la languette flexible 64 est engagée à travers la première fente 80. Cela est bien évidemment le cas de toutes les languettes flexibles 64 avec toutes les premières fentes 80 correspondantes. De la sorte, la partie inférieure 50 du caisson 32 est verrouillée à l'intérieur de la partie supérieure 48.

Le caisson 32 est alors réglé à sa hauteur maximale, et par conséquent à sa profondeur maximale comme illustré sur la [Fig. 2B]. Un tel réglage est adapté lorsque le groupe motopropulseur du véhicule automobile s'étend dans le compartiment moteur dans un espace restreint.

Dans le but de procéder au déverrouillage de la partie inférieure 50 du caisson 32 par rapport à la partie supérieure 48, on engage à force la chemise cylindrique 84, tel qu'illustré sur la [Fig. 6], entre la surface intérieure de la partie supérieure 48 et la surface extérieure de la partie inférieure 50, et on l'enfonce de manière à rétracter les languettes 64. Les extrémités libres en retour 66 se rétractent également et libèrent les premières fentes 80. Partant, la partie inférieure 50 du caisson 32 peut être entraînée à nouveau à travers la partie supérieure 48. Elle peut alors être totalement désolidarisée de la partie supérieure 48.

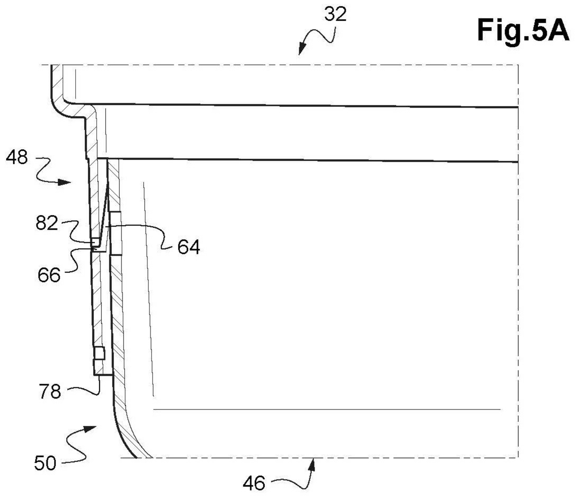

En revanche, si la chemise cylindrique 84 est retirée avant que la partie inférieure 50 ne soit totalement remontée, les languettes flexibles 64 peuvent se relâcher lorsque les extrémités libres en retour 66 viennent en regard des deuxièmes fentes 82. Les extrémités libres en retour 66 s'engagent alors dans les deuxièmes fentes 82 comme illustré sur la [Fig. 5A].

Le caisson 32 est alors réglé à sa hauteur minimale, et par conséquent, à sa profondeur minimale comme illustré sur la [Fig. 2A]. Ce réglage est adapté, notamment lorsque le groupe motopropulseur s'étend dans un plus grand volume du compartiment moteur.

On observera que cette position relative des parties inférieure 50 et supérieure 48, visant à obtenir un caisson 32 de moindre volume, peut être obtenue en engageant la chemise cylindrique 84 à travers la partie supérieure 50, de façon que la première portion cylindrique 86 soit située au-dessus des deuxièmes fentes 82 pour ne pas les masquer. En ce cas, la partie inférieure 50 peut être engagée à travers la chemise cylindrique 84 et la deuxième partie 48. De la sorte, les languettes flexibles 64 après avoir été fléchies, se détendent lorsque leurs extrémités libres 66 viendront en regard des deuxièmes fentes 82.

## Revendications

1. Ensemble de coffre à bagages comportant un caisson (32) adapté à être installé dans un coffre avant de véhicule automobile, ledit caisson comprenant d'une part, quatre parois (34, 36, 38, 40) dressées deux à deux en regard et délimitant une bordure libre supérieure (42) formant une ouverture (44), et d'autre part un fond (46) opposé à ladite ouverture et relié auxdites quatre parois ;
**caractérisé en ce que** lesdites parois comprennent quatre premières portions de paroi (52, 54, 56, 58) solidaires dudit fond (46) et définissant un premier cylindre (60) généré par une première génératrice, et quatre deuxièmes portions de parois (68, 70, 72, 74) solidaires de ladite bordure (42), définissant un deuxième cylindre (76) généré par une deuxième génératrice ;
et **en ce que** ledit premier cylindre (60) et ledit deuxième cylindre (76) sont montés réglables à coulissement l'un dans l'autre suivant lesdites génératrices pour pouvoir régler la profondeur dudit caisson (32).

2. Ensemble de coffre selon la revendication 1, **caractérisé en ce que** ledit premier cylindre (60) défini par lesdites quatre premières portions de paroi est monté à coulissement à l'intérieur dudit deuxième cylindre (76) défini par lesdites quatre deuxièmes portions de parois.

3. Ensemble de coffre selon la revendication 2, **caractérisé en ce que** lesdites quatre premières portions de paroi (52, 54, 56, 58) définissent un premier bord libre (62) opposé audit fond (46) et respectivement quatre faces extérieures, et **en ce qu'**au moins deux premières portions de paroi en regard (52, 54) présentent chacune une pluralité de languettes flexibles (64) s'étendant librement en saillie desdites faces extérieures à l'opposé dudit premier bord libre (62).

4. Ensemble de coffre selon la revendication 3, **caractérisé en ce que** chacune des languettes (64) de ladite pluralité de languettes présente une extrémité libre en retour (66) opposée à la face extérieure correspondante.

5. Ensemble de coffre selon la revendication 3 ou 4, **caractérisé en ce que** lesdites quatre deuxièmes portions de paroi (68, 70, 72, 74) définissent un deuxième bord libre (78) opposé à ladite bordure libre (42), et **en ce qu'**au moins deux deuxièmes portions de paroi en regard (68, 70) présentent chacune une pluralité de premières fentes (80) ménagées à une première distance dudit deuxième bord libre (78) pour pouvoir coopérer avec les languettes flexibles (64).

6. Ensemble de coffre selon la revendication 5, **caractérisé en ce que** lesdites au moins deux deuxièmes portions de paroi (68, 70) présentent chacune une pluralité de deuxièmes fentes (82) ménagées à une deuxième distance dudit deuxième bord libre (78) pour pouvoir coopérer avec les languettes flexibles (64).

7. Ensemble de coffre selon l'une quelconque des revendications 1 à 6, **caractérisé en ce qu'**il comprend en outre une chemise cylindrique (84) adaptée à être insérée entre lesdites quatre premières portions de paroi définissant un premier cylindre (60) et lesdites quatre deuxièmes portions de parois définissant un deuxième cylindre (76) pour pouvoir régler la position relative desdits deux cylindres.

8. Ensemble de coffre selon l'une quelconque des revendications 3 à 6 et 7, **caractérisé en ce que** ladite chemise cylindrique (84) est adaptée à coopérer avec lesdites languettes (64) pour les rétracter vers l'intérieur dudit premier cylindre (60) défini par lesdites quatre premières portions de paroi.

9. Ensemble de coffre selon l'une quelconque des revendications 1 à 8, **caractérisé en ce que** lesdites quatre deuxièmes portions (68, 70, 72, 74) présentent un décrochement (85) près de ladite bordure libre supérieure (42) en formant un épaulement d'appui extérieur (87).

10. Véhicule automobile présentant un coffre avant équipé d'un groupe motopropulseur électrique, **caractérisé en ce qu'**il comprend un ensemble de coffre selon l'une quelconque des revendications 1 à 9.
